# EUROPÄISCHE PATENTSCHRIFT

(11) **EP 1 293 308 B1**
(45) Veröffentlichungstag und Bekanntmachung des Hinweises auf die Patenterteilung: **30.06.2004**
(21) Anmeldenummer: 02019775.2
(22) Anmeldetag: 04.09.2002
(51) Int. Cl.: B25J 19/00, H02K 5/136

(54) **Verfahren und Vorrichtung zum Schutz einer explosionsgefährdeten Umgebung durch elektronische Bauteile mittels Luftaustausch**
Method and apparatus to protect an explosive environment from electronic devices via air exchange
Procédé et dispositif pour protéger un environnement explosif d'un élément électronique à l'aide d'échange de l'air

(30) Priorität: 17.09.2001 DE 10145695
(43) Veröffentlichungstag der Anmeldung: 19.03.2003
(73) Patentinhaber: Dürr Systems GmbH, 70435 Stuttgart (DE)
(72) Erfinder: Baumann, Michael, 74223 Flein (DE); Melcher, Rainer, 71720 Oberstenfeld (DE); Nolte, Hans-Jürgen, Dr., 70565 Stuttgart (DE); Frey, Marcus, 71263 Weil der Stadt (DE); Haas, Jürgen, 75438 Knittlingen (DE)
(74) Vertreter: Hertz, Oliver, Dr.

(56) Entgegenhaltungen:
- US-A- 4 668 146
- US-A- 4 732 526
- US-A- 4 894 748
- US-A- 5 065 062
- US-A- 5 421 218

## Beschreibung

Die Erfindung betrifft ein Verfahren zum Schützen der explosionsgefährdeten Umgebung eines elektrischen Bauteils und eine Beschichtungsvorrichtung mit einem solchen Bauteil gemäß dem Oberbegriff der unabhängigen Patentansprüche.

In Sprühanlagen zum Versprühen eines brennbaren Beschichtungsmaterials kann sich im Sprühbereich eine explosionsfähige Luftatmosphäre entwickeln. Für den daher insbesondere bei elektrostatischen Zerstäubern notwendigen Explosionsschutz sind verschiedene Möglichkeiten bekannt, wie beispielsweise eigensicherer Betrieb mit Strom- und/oder Spannungsbegrenzung (EP 0 949 735) oder das Einkapseln kleiner elektrischer Bauteile und die Verwendung kontaktloser Übertrager (DE 101 08 010). Ferner ist es üblich, elektrische Geräte von Beschichtungsanlagen in Schaltschränken mit einer technischen Belüftung anzuordnen, die die mittlere Konzentration von Lösemitteln unterhalb einer zulässigen Grenze halten soll und zu diesem Zweck für ständigen Luftwechsel im Schaltschrank sorgt.

Keinen zuverlässigen Explosionsschutz gab es aber bisher für innerhalb oder unmittelbar an einem Zerstäuber angeordnete elektrische Bauteile, wie z. B. Steckverbindungen, Magnetventile, Initiatoren usw. Insbesondere gilt das auch für die Hochspannungserzeuger elektrostatischer Zerstäuber in Form der üblichen, typisch in rohrförmigen Gehäusen befindlichen Kaskaden. Die Hochspannungskaskaden sollen sich bekanntlich möglichst nahe an den auf das Hochspannungspotential zu legenden Elektroden befinden und werden daher zweckmäßig in oder an dem Zerstäuber oder in dem Roboter oder der sonstigen Beschichtungsmaschine angeordnet, an der der Zerstäuber ggf. automatisch ganz oder teilweise wechselbar montiert ist. In bekannten Spritzapparaten dieser Art (EP 0 967 016, EP 0 967 018, US 5,310,120, WO 01/15814) besteht Explosionsgefahr aufgrund von elektrischen Kontaktstellen, die offen in ihrer explosionsgefährdeten Umgebung beispielsweise innerhalb des Zerstäubers liegen.. Selbst bei an sich druckdicht eingekapselten Bauteilen besteht die Gefahr des Luftaustritts durch ein Leck.

Aus US-A-4,894,748 ist es bekannt, einen in einer explosionsgefährdeten Umgebung betriebenen elektronischen Steuerterminal in einem geschlossenen Gehäuse anzuordnen, in dem unter Überdruck stehende Luft oder ein inertes Gas in einem vorbestimmten Zeitraum ausgetauscht wird, der ausreicht, die Bildung einer explosionsfähigen Atmosphäre zu vermeiden.

Aus US-A-5,421,218, US-A-4,668,14,6 und US-A-4,732,526 sind in einer explosionsgefährdeten Umgebung arbeitende Lackierroboter oder dergleichen bekannt, deren Antriebsmotoren in unter Druck gesetzten Kammern angeordnet sind, um das Eindringen in zündbare Gase oder Dämpfe zu verhindern.

Der Erfindung liegt die Aufgabe zugrunde, explosionssicheren Einbau eines Hochspannungserzeugers und sonstiger elektrischer Bauteile in einen Zerstäuber und/oder in die zugehörige Trennstelle an der Beschichtungsmaschine zu ermöglichen.

Diese Aufgabe wird durch die Merkmale der Patentansprüche gelöst.

Durch die Erfindung wird ein zuverlässiger Explosionsschutz auf einfache Weise auch für Bauteile relativ hoher elektrischer Leistung erreicht, und zwar ohne erhebliche Vergrößerung des Gewichts und der Baugröße der Bestandteile der Beschichtungsvorrichtung, was u.a. bei Beschichtungsrobotern wichtig ist. Aufgrund dieser Vorteile können insbesondere automatische Zerstäuberwechselsysteme mit explosionssicherer Hochspannungskaskade und explosionssicherer elektrischer Schnittstelle am Wechselflansch realisiert werden.

Am Beispiel eines automatisch wechselbar an einem Roboter montierten elektrostatischen Zerstäubers in verschiedenen Ausführungsformen wird die Erfindung näher erläutert. In der Zeichnung zeigen:
- Fig. 1: den Zerstäuber mit vollständig eingebautem Hochspannungserzeuger und einer elektrischen Trennstelle;
- Fig. 2: eine Ausführungsform mit einer Hochspannungs-Trennstelle; und
- Fig. 3: eine Ausführungsform, bei der der Hochspannungserzeuger in den Montageteil des Roboters eingebaut ist, an dem der Zerstäuber montiert ist.

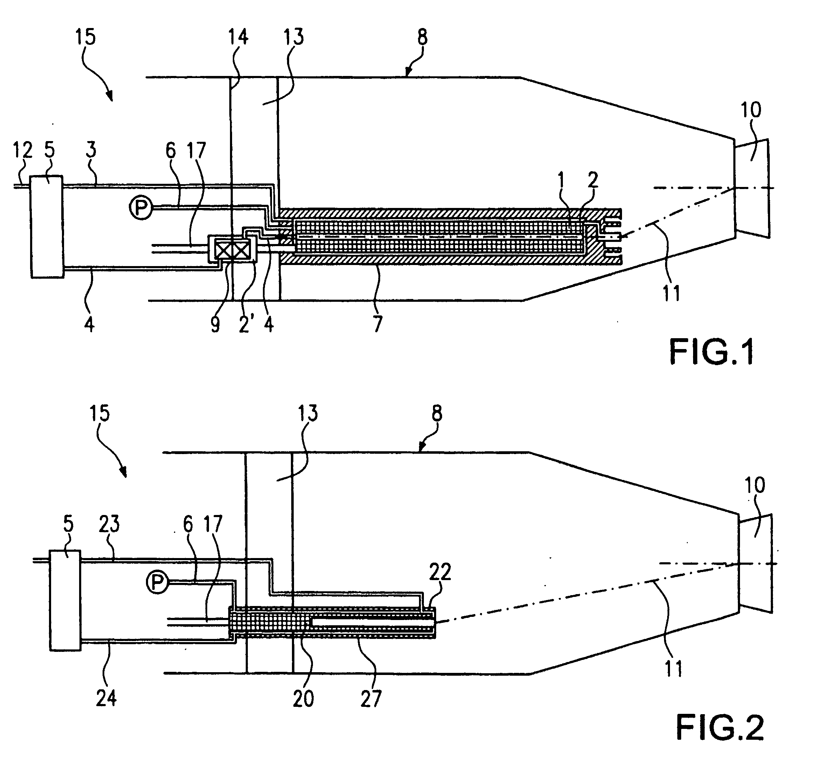

Gemäß Fig. 1 handelt es sich bei dem elektrischen Bauteil, für dessen Umgebung Explosionsschutz gewährleistet werden soll, um einen Hochspannungserzeuger 1, der im Inneren des elektrostatischen Zerstäubers, beispielsweise eines Rotationszerstäubers, angeordnet und über eine Hochspannungskontaktierungsleitung 11 mit dem Sprühkopf 10 verbunden ist. Der Hochspannungserzeuger 1 ist vollständig von einer Luftkammer 2 umschlossen, die in ein Gehäuseteil 7 integriert sein kann. Das darstellungsgemäß langgestreckte Gehäuseteil 7 kann durch einen Innenteil des Zerstäubers gebildet oder mit dem Hochspannungserzeuger zu einer Baueinheit verbunden sein und grenzt mit seiner einen Stirnseite an den Befestigungsflansch 13 des Zerstäubers 8 an, mit dem dieser an der Trennebene 14 des ihm zugewandten Montageteils 15 des Roboters montiert ist. Das Gehäuseteil 7 kann aus Isoliermaterial bestehen.

Die den Hochspannungserzeuger 1 enthaltende Luftkammer 2 hat bei dem dargestellten Beispiel eine Lufteinlassleitung 4, die durch den Flansch 13 in einen zentral längs durch den Hochspannungserzeuger 1 führenden Kanal mündet, der an dem dem Flansch 13 abgewandten Ende in die eigentliche Luftkammer mündet. An eine radial äußere Stelle der Luftkammer 2 ist eine Luftauslassleitung 3 angeschlossen, die ebenfalls durch den Flansch 13 hindurchführt. Im Montageteil 15 oder an einer sonstigen Stelle innerhalb oder außerhalb des Roboters sind die beiden Leitungen 3 und 4 an eine gesteuerte Luftquelle 5 angeschlossen. Bis auf die Leitungen 3, 4 ist die Luftkammer gegen die Umgebung innerhalb (und außerhalb) des Zerstäubers abgeschlossen.

Beispielsweise in die Lufteinlassleitung 4 ist eine zweite Luftkammer 2' eingebaut, die aus zwei voneinander trennbaren Teilen besteht, von denen sich der eine Teil auf der dem Zerstäuber 8 zugewandten Seite der Trennebene 14 in dem Flansch 13 befindet, während der andere, roboterseitige Teil darstellungsgemäß auf der anderen Seite der Trennebene 14 in dem Montageteil 15 ausgebildet ist. In dieser bis auf die Leitung 4 ebenfalls nach außen geschlossenen Luftkammer 2' ist als weiteres elektrisches Bauteil eine als elektrische Trennstelle dienende Verbindungseinheit 9 angeordnet, beispielsweise eine Steckverbindung oder ein kontaktloser Übertrager od. dgl. Über die trennbare Verbindungseinheit 9 ist der Hochspannungserzeuger an den externen elektrischen Anschluss 17 angeschlossen. Somit sind bei diesem Beispiel einer durch einen Zerstäuber und den zugehörigen Montageteil eines Roboters gebildeten Beschichtungsvorrichtung zwei jeweils von einer eigenen Luftkammer innerhalb der Beschichtungsvorrichtung umschlossene Bauteile elektrisch in Reihe geschaltet, wobei die beiden Luftkammern ihrerseits in eine gemeinsame Luftleitung im Inneren der Vorrichtung geschaltet sind.

Im Betrieb und zweckmäßig auch vor Betriebsbeginn führt die gesteuerte Luftquelle 5 in den beiden Luftkammern 2 und 2' kontinuierlich oder zyklisch in vorbestimmten Zeitabständen einen Luftaustausch durch, um die Entstehung eines zündfähigen Gemisches und somit einer explosionsfähigen Luftatmosphäre im Bereich des Hochspannungserzeugers und im Bereich der elektrischen Trennstelle zu verhindern, und zwar auch dann, wenn das an sich nach außen geschlossene Gehäuse des betreffenden elektrischen Bauteils nicht ganz dicht sein sollte. Das wird erreicht, wenn ein Vielfaches des Luftvolumens der Kammer in einer bestimmten Zeit (mindestens das fünffache, vorzugsweise mindestens das zehnfache Luftvolumen pro Stunde) ausgetauscht wird. Der Druck in den Luftkammern wird beispielsweise über eine aus dem Montageteil 15 durch den Flansch 13 in die Luftkammer 2 führende Stichleitung 10 gemessen und überwacht, wie durch das Messgerät P angedeutet ist. Die den Luftkammern 2, 2' entnommene Luft kann z. B. durch ein Auslassrohr 12 der Luftquelle 5 ausgestoßen werden.

Wie oben beschrieben, kann der Hochspannungserzeuger 1 in ein inneres Gehäuseteil 7 des Zerstäubers eingebaut und die Luftkammer somit zwischen diesem Gehäuseteil und dem elektrischen Bauteil gebildet sein. Statt dessen besteht aber auch die Möglichkeit, den Hochspannungserzeuger bzw. das elektrische Bauteil in ein eigenes Gehäuse zu integrieren, z. B. einzugießen, und diese Einheit in den Zerstäuber einzubauen. In diesem (nicht dargestellten) Fall kann die Luftkammer zwischen der Außenseite des Gehäuses des elektrischen Bauteils und der Innenseite eines Gehäuseteils des Zerstäubers gebildet sein, in das die Einheit eingesetzt wird.

Bei der Ausführungsform nach Fig. 2 erstreckt sich eine in einem langgestreckten Gehäuseteil 27 des Zerstäubers 8 gebildete Luftkammer 22 darstellungsgemäß aus dem Montageteil 15 des Roboters durch den Flansch 13 hindurch bis in das Innere des Zerstäubers. In dieser Luftkammer 22 sitzt ein Hochspannungssteckverbinder 20, der den (nicht sichtbaren, außerhalb des Zerstäubers befindlichen) Hochspannungserzeuger mit der Kontaktierungsleitung 11 verbindet. Dieser aus Isolationsgründen wegen der hohen Spannungen relativ große, an sich bekannte Steckverbinder kann beim Ankuppeln des Zerstäubers 8 an den Roboter in den Zerstäuber eingeschoben und abgedichtet werden. Die zweiteilige Koppel- oder Verbindungseinheit 9 nach Fig. 1 kann hier entfallen, da die durch den Steckverbinder 20 gebildete Trennstelle selbst das erfindungsgemäße relevante elektrische Bauteil bildet. Die elektrische Trennstelle ist somit direkt mit dem Sprühkopf 10 verbunden. Der Steckverbinder 20 könnte auch fest in den Zerstäuber 8 eingebaut sein.

Der erforderliche Luftaustausch erfolgt wie bei Fig. 1 mit Hilfe der gesteuerten Luftquelle 5 durch Ein- und Auslassleitungen 23, 24, die hier allerdings radial an zwei Stellen durch das Gehäuse 27 führen, die in der Nähe seiner Stirnseiten im Montageteil 15 des Roboters bzw. im Inneren des Zerstäubers 8 liegen.

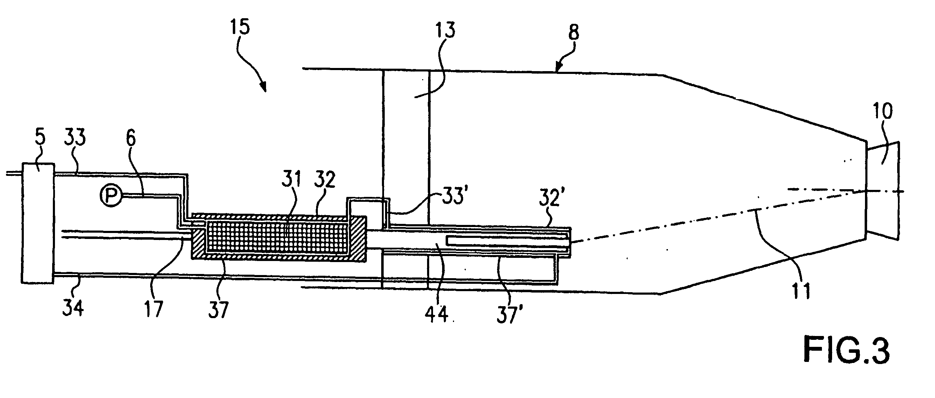

Bei der Ausführungsform nach Fig. 3 befinden sich der Hochspannungserzeuger 31 und sein Gehäuse 37 vollständig im Montageteil 15 des Roboters. Ein gesondertes langgestrecktes Gehäuse 37', das sich durch den Flansch 13 in den Zerstäuber 8 erstreckt, dient dagegen zur Aufnahme eines Hochspannungsverbinders 44, der einerseits an den Hochspannungserzeuger 31 und andererseits über die Leitung 11 an den Sprühkopf 10 angeschlossen ist. In dem Gehäuse 37 des Hochspannungserzeugers 31 und in dem Gehäuse 37' des Hochspannungsverbinders 34 ist jeweils eine Luftkammer 32 bzw. 32' ausgebildet.

Aus der gesteuerten Luftquelle 5 führt eine erste Luftleitung 33 in ein Ende der Luftkammer 32 und aus deren entgegengesetztem Ende über eine Verbindungsleitung 33' in das nahe Ende der Luftkammer 32' des Zerstäubers 8. Aus dem fernen Ende der Luftkammer 32' führt eine zweite Luftleitung 34 durch den Flansch 13 zurück zu der Luftquelle 5. Ähnlich wie bei Fig. 1 und 2 dienen diese Luftleitungen 33, 34 als Ein- und Auslassleitungen für den beschriebenen Luftaustausch. Ähnlich wie bei Fig. 1 sind also zwei elektrische Bauteile in Reihe geschaltet und von in eine gemeinsame Luftleitung geschalteten jeweiligen Luftkammern umgeben.

Bei allen beschriebenen Ausführungsformen können beim Ankuppeln des Zerstäubers an den Roboter die erforderlichen Leitungsverbindungen für Strom und Luft in einer an sich üblichen Weise nach außen abgedichtet werden.

## Patentansprüche

1. Verfahren zum Schützen der explosionsgefährdeten Umgebung mindestens eines elektrischen Bauteils (1, 9, 20, 31, 44), das sich wenigstens teilweise in einem an einer Beschichtungsmaschine montierten Zerstäuber (8) und/oder in dem Montageteil (15) der Beschichtungsmaschine befindet, an dem der Zerstäuber (8) montiert ist, vor der Bildung einer explosionsfähigen Atmosphäre,
**dadurch gekennzeichnet, dass** die Luft, die sich in einer das elektrische Bauteil (1, 9, 20, 31, 44) vollständig umschließenden, gegen die explosionsgefährdete Umgebung innerhalb des Zerstäubers (8) und/oder des Montageteils (15) geschlossenen Luftkammer (2, 22, 32) befindet,in einem vorbestimmten Zeitraum ausgetauscht wird, der ausreicht, die Bildung einer explosionsfähigen Atmosphäre zu vermeiden.

2. Verfahren nach Anspruch 1, **dadurch gekennzeichnet, dass** der Luftaustausch kontinuierlich erfolgt.

3. Verfahren nach Anspruch 1, **dadurch gekennzeichnet, dass** der Luftaustausch zyklisch in vorbestimmten Zeitabständen erfolgt.

4. Verfahren nach einem der vorangehenden Ansprüche, **dadurch gekennzeichnet, dass** der Druck der Luft innerhalb der Luftkammer (2, 2') überwacht wird.

5. Verfahren nach einem der vorangehenden Ansprüche, **dadurch gekennzeichnet, dass** das Volumen der im Betrieb der Beschichtungsvorrichtung durch die Luftkammer (2, 22, 32) geleiteten Luft pro Stunde mindestens das fünffache Luftvolumen der Luftkammer beträgt.

6. Beschichtungsvorrichtung mit einem Zerstäuber (8), der an einem Montageteil (15) einer Beschichtsungsmaschine montiert oder auswechselbar montierbar ist, und mit mindestens einem elektrischen Bauteil (1, 9), 20, 31, 44), das sich in einer explosionsgefährdeten Umgebung wengistens teilweise in dem Zerstäuber (8) und/oder, in dem Montageteil (15) befindet,
**dadurch gekennzeichnet, dass** das elektrische Bauteil (1, 9,20, 31, 44) vollständig von einer wenigstens teilweise in dem Zerstäuber und/oder in dem Montageteil (15) befindlichen Luftkammer (2, 22, 32) umschlossen ist, die ihrerseits gegen die explosionsgefährdete Umgebung geschlossen ist,
und dass an die Luftkämmer (2, 22, 32) eine mit einer gesteuerten Luftquelle (5) verbundene Lufteingangsleitung (4) und eine Luftausgangsleitung (3) angeschlossen sind, durch welche die in der Luftkammer (2, 22, 32) befindliche Luft austauschbar ist.

7. Beschichtungsvorrichtung nach Anspruch 6, **dadurch gekennzeichnet, dass** das elektrische Bauteil der Hochspannungserzeuger (1) eines elektrostatischen Zerstäuber (8) ist.

8. Beschichtungsvorrichtung nach Anspruch 6 oder 7, **dadurch gekennzeichnet, dass** das elektrische Bauteil eine Verbindungseinheit (9) mit trennbaren Teilen ist.

9. Beschichtungsvorrichtung nach einem der Ansprüche 6 bis 8, **dadurch gekennzeichnet, dass** an die Luftkammer (2, 2') ein Drucksensor (P) zum Messen des Luftdrucks in der Luftkammer (2, 2') angeschlossen ist.

10. Beschichtungsvorrichtung nach einem der Ansprüche 6 bis 9, **dadurch gekennzeichnet, dass** sie durch einen Roboter oder eine sonstige mehrachsig gesteuerte Bewegungsmaschine gebildet ist, an der der Zerstäuber (8) automatisch wechselbar montiert ist.

## Claims

1. Method of protecting the environment at risk of explosion which surrounds at least one electrical component (1, 9, 20, 31, 44) located at least partially in an atomiser (8) mounted on a coating machine and/or in the mounting part (15) of the coating machine on which the atomiser (8) is mounted, before an explosive atmosphere is formed, **characterised in that** the air which is located in an air chamber (2, 22, 32) which completely surrounds the electrical component (1, 9, 20, 31, 44) and is closed against the environment at risk of explosion within the atomiser (8) and/or the mounting part (15) is changed in a predetermined time interval which is sufficient to prevent the formation of an explosive atmosphere.

2. Method as claimed in Claim 1, **characterised in that** the change of air takes place continuously.

3. Method as claimed in Claim 1, **characterised in that** the change of air takes place cyclically in predetermined time intervals.

4. Method as claimed in any one of the preceding claims, **characterised in that** the pressure of the air within the air chamber (2, 2') is monitored.

5. Method as claimed in any one of the preceding claims, **characterised in that** the volume of air passed through the air chamber (2, 22, 32) per hour during the operation of the coating device is at least five times the volume of air in the air chamber.

6. Coating device with an atomiser (8) which is mounted on a mounting part (15) of a coating machine or can be replaceably mounted thereon and with at least one electrical component (1, 9, 20, 31, 44) located in an environment at risk of explosion at least partially in the atomiser (8) and/or in the mounting part (15), **characterised in that** the electrical component (1, 9, 20, 31, 44) is completely surrounded by an air chamber (2, 22, 32) which is located at least partially in the atomiser and/or in the mounting part (15) and for its part is closed against the environment at risk of explosion, and **in that** an air inlet pipe (4) connected to a controlled air source (5) and an air outlet pipe (3), by means of which the air in the air chamber (2, 22, 32) is changed are connected to the air chamber (2, 22, 32).

7. Coating device as claimed in Claim 6, **characterised in that** the electrical component of the high voltage generator (1) is an electrostatic atomiser (8).

8. Coating device as claimed in Claims 6 or 7, **characterised in that** the electrical component is a connecting unit (9) with separable parts.

9. Coating device as claimed in any one of Claims 6 to 8, **characterised in that** a pressure sensor (P) for measuring the air pressure in the air chamber (2, 2') is connected to the air chamber (2, 2').

10. Coating device as claimed in any one of Claims 6 to 9, **characterised in that** it is formed by a robot or some other multiaxially-controlled moving machine on which the atomiser (8) is mounted so as to be automatically replaceable.

## Revendications

1. Procédé pour protéger l'environnement soumis à un risque d'explosion d'au moins un composant électrique (1, 9, 20, 31, 44) qui se trouve au moins en partie dans un pulvérisateur (8) monté sur une machine de revêtement et/ou dans la partie de montage (5) de la machine de revêtement, sur laquelle est monté le pulvérisateur (8), contre la formation d'une atmosphère explosive, **caractérisé en ce que** l'air, qui se trouve dans une chambre à air (2, 22, 32) enfermant entièrement le composant électrique (1, 9, 20, 31, 44) et fermée par rapport à l'environnement soumis à risque d'explosion à l'intérieur du pulvérisateur (8) et/ou de la partie de montage (15), est renouvelé en un laps de temps prédéterminé qui suffit pour éviter la formation d'une atmosphère explosive.

2. Procédé selon la revendication 1, **caractérisé en ce que** l'échange d'air s'effectue de manière continue.

3. Procédé selon la revendication 1, **caractérisé en ce que** l'échange d'air s'effectue cycliquement à intervalles de temps prédéterminés.

4. Procédé selon l'une des revendications précédentes, **caractérisé en ce que** la pression de l'air à l'intérieur de la chambre à air (2, 2') est contrôlée.

5. Procédé selon l'une des revendications précédentes, **caractérisé en ce que** le volume par heure de l'air acheminé à travers la chambre à air (2, 22, 32) pendant le fonctionnement du dispositif de revêtement, représente au moins cinq fois le volume d'air de la chambre à air.

6. Dispositif de revêtement comportant un pulvérisateur (8) qui est monté ou peut être monté de manière échangeable sur une partie de montage (15) d'une machine de revêtement, et comportant au moins un composant électrique (1, 9, 20, 31, 44) qui se trouve dans un environnement soumis à un risque d'explosion au moins en partie dans le pulvérisateur (8) et/ou dans la partie de montage (15), **caractérisé en ce que** le composant électrique (1, 9, 20, 31, 44) est entièrement enfermé par une chambre à air (2, 22, 32) qui se trouve au moins en partie dans le pulvérisateur et/ ou dans la partie de montage (15) et qui est fermée de son côté par rapport à l'environnement soumis à un risque d'explosion, et **en ce qu'**à la chambre à air (2, 22, 32) sont raccordées une conduite d'entrée d'air (4) reliée à une source d'air (5) commandée, et une conduite de sortie d'air (3), par lesquelles l'air se trouvant dans la chambre à air (2, 22, 32) peut être renouvelé.

7. Dispositif de revêtement selon la revendication 6, **caractérisé en ce que** le composant électrique est le générateur haute tension (1) d'un pulvérisateur électrostatique (8).

8. Dispositif de revêtement selon la revendication 6 ou 7, **caractérisé en ce que** le composant électrique est une unité de liaison (9) avec éléments séparables.

9. Dispositif de revêtement selon les revendications 6 à 8, **caractérisé en ce qu'**à la chambre à air (2, 2') est raccordé un capteur de pression (P) pour mesurer la pression de l'air dans la chambre à air (2, 2').

10. Dispositif de revêtement selon l'une des revendications 6 à 9, **caractérisé en ce qu'**il est formé par un robot ou une autre machine de déplacement commandée à plusieurs axes, sur laquelle le pulvérisateur (8) est monté de manière à pouvoir être échangé automatiquement
